# EUROPÄISCHE PATENTANMELDUNG

(11) **EP 2 942 617 A1**
(43) Veröffentlichungstag der Anmeldung: **11.11.2015**
(21) Anmeldenummer: 14167594.2
(22) Anmeldetag: 08.05.2014
(51) Int. Cl.: G01N 21/47, G02B 5/02, F21V 7/00, G01J 1/02, G01J 1/08, G01J 3/10, G01J 1/04

(54) **Beleuchtungseinrichtung**

(71) Anmelder: Image Engineering GmbH & Co. KG, 50226 Frechen (DE)
(72) Erfinder: Wüller, Dietmar, 50129 Bergheim (DE)
(74) Vertreter: Simandi, Claus

(57) **Zusammenfassung**

Die vorliegende Erfindung betrifft eine Beleuchtungseinrichtung, mit der, insbesondere für wissenschaftliche Zwecke oder Zwecke der Qualitätsprüfung, eine Fläche besonders gleichmäßig ausgeleuchtet werden kann. Genauer geht es um eine Beleuchtungseinrichtung zur homogenen Ausleuchtung eines Objekts, welche eine Homogenisierungseinrichtung (10) umfasst und zur Verbindung mit einer Lichtquelle geeignet ist, wobei die Homogenisierungsvorrichtung (10) eine Eintrittsöffnung (12), eine hinter der Eintrittsöffnung (12) angeordnete Eintrittskammer (16), eine Zwischenkammer (18), eine Austrittskammer (20) und eine hinter der Austrittskammer (20) angeordnete Austrittsöffnung (22) aufweist und die Eintrittskammer (16), die Zwischenkammer (18) und die Austrittskammer (20) jeweils eine Außenfläche (26) und eine Innenfläche (24) aufweisen und sich die Eintrittskammer (16) entlang einer ersten Hauptachse (H1) erstreckt und sich die Austrittskammer (20) entlang einer zweiten Hauptachse (H2) erstreckt, und eine im Bereich der Eintrittsöffnung (12) angeordnete Lichtquelle Licht durch die Eintrittskammer (16), die Zwischenkammer (18), die Austrittskammer (20) und die Austrittsöffnung (22) auf ein auszuleuchtendes Objekt senden kann, dadurch gekennzeichnet dass kein Lichtstrahl entlang einer Geraden von einem Punkt der Eintrittsöffnung (12) zu einem Punkt der Austrittsöffnung (22) gelangen kann und dass jeweils mindestens die Innenfläche (24) der Eintrittskammer (16), der Zwischenkammer (18) und der Austrittskammer (20) in jeweils mindestens einem ersten Bereich diffus reflektierend sind, so dass ein an einer dieser Innenflächen (24) reflektierter Lichtstrahl, welcher einfallend eine erste Referenzfläche (R1) mit einer ersten Bestrahlungsstärke ausleuchtet, ausfallend eine zweite Referenzfläche (R2) gleicher Größe mit einer zweiten Bestrahlungsstärke ausleuchtet, welche mindestens um einen Faktor 3 geringer ist als die erste Bestrahlungsstärke, wenn beide Referenzflächen (R1, R2) im Abstand von 10 Millimetern zum Reflexionspunkt (P) positioniert sind.

## Beschreibung

### Gebiet der Erfindung

Die vorliegende Erfindung betrifft eine Beleuchtungseinrichtung, mit der, insbesondere für wissenschaftliche Zwecke oder Zwecke der Qualitätsprüfung, eine Fläche besonders gleichmäßig ausgeleuchtet werden kann. Die Beleuchtungseinrichtung umfasst dabei zumindest eine Lichtquelle und eine Homogenisierungseinrichtung.

### Hintergrund der Erfindung

Die gleichmäßige Ausleuchtung von Objekten ist auf mehreren Gebieten ein wichtiges Anliegen. In der wissenschaftlichen Anwendung spielt sie beispielsweise auf den Gebieten der Umweltdiagnose der Biotechnologie und der Chemie eine Rolle, etwa wenn es darum geht, die Transmissions- oder Reflexionseigenschaften einer Probe zu erfassen. Ebenfalls wichtig ist die gleichmäßige Ausleuchtung im Bereich der Optik. Hier kann es um Testverfahren zur Prüfung von Optiken und Kameras gehen, also sowohl von Linsensystemen als auch von Sensoren.

Ein bekannter Ansatz zur Erzeugung von homogenem Licht ist der Einsatz einer Ulbrichtkugel. Eine solche Kugel verfügt über einen Lichteinlass und eine Auslassöffnung. Verglichen mit diesen Öffnungen ist die Kugel groß. In der Regel sollte der Kugeldurchmesser mindestens 5x größer sein als der Durchmesser der Auslassöffnung. Vorzugsweise werden auch nur maximal 5% der (inneren) Kugeloberfläche von Öffnungen durchbrochen.

Aus dem Stand der Technik ist eine Reihe von Anwendungen für diesen bislang praktisch alternativlosen Ansatz zur homogenen Beleuchtung von Objekten bekannt.

Die deutsche Patentschrift DE 101 06 032 B4 (Patentinhaber: Laser-Laboratorium Göttingen e.V.) offenbart eine Vorrichtung zur homogenen Ausleuchtung einer kleinen Fläche mit einer Ulbricht'schen Kugel. Eine Besonderheit dieses Ansatzes ist, dass mindestens zwei Lichtquellen innerhalb der Kugel vorgesehen sind. Diese Lichtquellen werden in der Kugelwand angeordnet. Die Vorrichtung soll besonders vorteilhaft zur homogenen Ausleuchtung einer Fläche sein, wenn es um die schnelle Änderungen der spektralen Eigenschaften der Beleuchtung geht.

Die deutsche Patentschrift DE 28 34 983 C3 (Patentinhaber: V. Blazek) offenbart eine alternative Anwendung einer Ulbricht'schen Kugel. Hier geht es um einen Messkopf für Beleuchtungsmessgeräte. In diesem Fall wird der zu messende Lichtstrom in die Kugel eingeleitet. An einer Öffnung der Kugel ist daher ein Photodetektor vorgesehen. Typisch für die Verwendung der Ulbrichtkugel ist, dass zwischen Lichtquelle und Photodetektor ein Abschatter vorgesehen ist. Die Kugelform der Ulbrichtkugel macht es möglich, dass Licht auf direktem Wege von einer Einlassöffnung zu einer Auslassöffnung gelangt. (Allenfalls kann dies durch die Anordnung der Lichtquelle außerhalb der Kugel vermieden werden.) In diesem Falle also könnte Licht des zu messenden einfallenden Lichtstromes unmittelbar auf den Photodetektor gelangen. Dies würde die Messung verfälschen, da es ja gerade um die gleichmäßige Lichtverteilung vor der Detektion geht. Die Verwendung eines Abschatters ist daher typisch und spielt auch bei diesem Einsatz der Ulbrichtkugel als Messkopf für Beleuchtungsstärke-Messgeräte eine Rolle.

Das US-Patent US 8,259,294 B2 (Patentinhaber: Von-Ardenne-Anlagentechnik GmbH) offenbart wiederum einen Einsatz einer Ulbrichtkugel zur Erzeugung homogenen Lichtes. Hierbei geht es um den effizienten Einsatz der Kugel zur Messung der Reflexion und Transmission von Substratplättchen. Da die Substratplättchen auf einer Art Förderband an der Kugel vorbeigeleitet werden können, kommt hier sogar ein industrieller Einsatz in Betracht. Die Lichtquelle ist innerhalb der Kugel positioniert, zu beiden Seiten der Lichtquelle sind wiederum Abschatter (auch "Schatter" genannt) vorgesehen. Der Messaufbau nimmt im Verhältnis zu den kleinen zu messenden Objekten viel Raum ein.

Die vorliegende Erfindung möchte den Stand der Technik verbessern. Es soll eine Beleuchtungseinrichtung angeboten werden, welche eine kompakte Bauform erlaubt und dennoch effizient arbeitet. Dabei kommt es durchaus in Betracht, diese Beleuchtungseinrichtung auch im industriellen Einsatz zu verwenden.

### Nähere Beschreibung der Erfindung

Diese Aufgabe wird durch eine Beleuchtungseinrichtung nach Anspruch 1 gelöst.

Die Beleuchtungseinrichtung ist also zur Verbindung mit einer Lichtquelle geeignet. Die Lichtquelle kann optionales Element der Beleuchtigungeinrichtung sein, sie kann aber alternativ auch Teil der Beleuchtungseinrichtung sein. Demgemäß kann die Lichtquelle integral, fest oder lösbar mit anderen Elementen, insbesondere der Homogenisierungseinrichtung, verbunden oder verbindbar sein. Die Beleuchtungseinrichtung zur homogenen Ausleuchtung eines Objekts kann also auch eine Lichtquelle und eine Homogenisierungseinrichtung umfassen.

Diese Lichtquelle selbst kann aus einem einzigen Strahler bestehen (Glühlampe mit Glühfaden, Halogenlampe oder dergleichen), sie kann aber auch aus mehreren, in einer Einheit zusammengefassten Strahlern bestehen. Insbesondere kommt es in Betracht, dass eine Vielzahl von LEDs verwendet wird. Diese können auf einer Platte angeordnet werden. In dieser Weise kann eine flächige Lichtquelle gebildet werden. Es ist auch möglich, mehr als eine Lichtquelle vorzusehen, beispielsweise zwei Lichtquellen, die jeweils separat eine bauliche Einheit bilden.

Die Homogenisierungsvorrichtung umfasst eine Eintrittsöffnung, eine hinter der Eintrittsöffnung angeordnete Eintrittskammer, eine Zwischenkammer, eine Austrittskammer und eine hinter der Austrittskammer angeordnete Austrittsöffnung. Diese Kammern weisen jeweils eine Außenfläche und eine Innenfläche auf.

Eine im Bereich der Eintrittsöffnung angeordnete Lichtquelle kann Licht durch die Eintrittskammer, die Zwischenkammer, die Austrittskammer und die Austrittsöffnung auf ein aufzuleuchtendes Objekt senden. Die erfindungsgemäße Anordnung ist so, dass dabei kein Lichtstrahl entlang einer Geraden von einem Punkt der Eintrittsöffnung zu einem Punkt der Austrittsöffnung gelangen kann.

Ferner sind jeweils mindestens die halbe Innenfläche der Eintrittskammer, der Zwischenkammer und der Austrittskammer diffus reflektierend gestaltet. Die diffus reflektierend gestalteten Flächen können so angeordnet sein, dass sie überwiegend zur Lichtreflektion beitragen. Es ist aber auch möglich, mehr als die halbe Innenfläche der jeweiligen Kammer, beispielsweise mehr als 70%, 80% oder 90% der Innenflächen oder auch die ganzen Innenflächen mindestens einer oder aller Kammern diffus reflektierend zu gestalten.

Die Innenflächen der Kammern sollen dabei zumindest dort, wo sie diffus reflektierend sind, so gestaltet sein, dass ein an einer dieser Innenflächen reflektierter Lichtstrahl, welcher einfallend eine erste Referenzfläche mit einer ersten Bestrahlungsstärke ausleuchtet, ausfallend eine symmetrisch positionierte zweite Referenzfläche gleicher Größe mit einer zweiten Beleuchtungsstärke ausleuchtet, wobei die zweite Bestrahlungsstärke mindestens einen Faktor 3 geringer ist als die erste Bestrahlungsstärke. Die diffus reflektierenden Flächen können auch so gestaltet sein, dass dieser Faktor 5, 10 oder mehr beträgt. Hierdurch wird erreicht, dass nur ein geringer Lichtanteil einer klassischen Spiegelreflektion unterliegt, also einer, bei der Einfallswinkel gleich Ausfallswinkel ist.

Die beschriebenen Referenzflächen sollen dabei eine Größe von 5 mm x 5 mm haben. Die erste Referenzfläche soll in der Einfallsrichtung eines Teststrahls 10 mm über der reflektierenden Oberfläche angeordnet werden. Die zweite Referenzfläche, welche in Ausfallsrichtung angeordnet ist, soll in Ausfallsrichtung eines spiegelreflektierten Stahles ebenfalls den Abstand von 10 mm zum Reflektionspunkt haben.

In dieser überraschenden Weise ist es trotz der zum Teil kantigen inneren Geometrie der Homogenisierungseinrichtung möglich, ein sehr homogenes austretendes Licht zu erhalten. Dies ist auch insoweit überraschend als der bewährte Ansatz, der durch eine Kugel repräsentierten vollständigen Symmetrie der Innenflächen aufgegeben wird. Nichtsdestotrotz wird auch eine sehr homogene spektrale Lichtverteilung erreicht.

Ferner erlaubt es diese Fortentwicklung auch, im Inneren der Kammer auf Schatter zu verzichten. Da das Innere der entsprechenden Kammern schwer zugänglich ist und auch eine möglichst homogene Oberfläche aufweisen soll ist die Notwendigkeit, einen Schatter vorzusehen, ein wesentlicher Nachteil im Stande der Technik, welcher jedoch mit Ulbrichtkugeln nur überwunden werden kann, indem die Lichtquelle zurückversetzt, also mit Abstand zur Kugel, angeordnet wird und z.B. über einen Tubus einstrahlt.

Alternativ oder zusätzlich kann die vorteilhafte Gestaltung der Innenflächen der genannten Kammern auch in anderer Weise erreicht werden. Beispielsweise ist es zweckmäßig, die Innenflächen so zu gestalten, dass ein an einer dieser Innenflächen reflektierter Lichtstrahl, welcher einfallend einen ersten Raumwinkel beleuchtet, ausfallend einen mindestens 3x größeren Raumwinkel beleuchtet.

Zweckmäßig werden die Innenflächen matt oder stumpf matt gestaltet. Die Innenflächen sollen daher einen Glanzgrad von weniger als 10, vorzugsweise auch weniger als 8, 5 oder 3 haben. Die Glanzgradmessung erfolgt dabei zweckmäßig nach EN ISO 2813 unter Verwendung einer 85-Grad-Geometrie.

Die Erfindung bezieht sich daher auch auf homogenen Beleuchtungseinrichtung zur homogenen Ausleuchtung eines Objekts, welche eine Homogenisierungseinrichtung umfasst und ein Lichtquelle umfassen kann, wobei die Homogenisierungsvorrichtung eine Eintrittsöffnung, eine hinter der Eintrittsöffnung angeordnete Eintrittskammer, eine Zwischenkammer, eine Austrittskammer und eine hinter der Austrittskammer angeordnete Austrittsöffnung aufweist und die Eintrittskammer, die Zwischenkammer und die Austrittskammer jeweils eine Außenfläche und eine Innenfläche aufweisen und sich die Eintrittskammer entlang einer ersten Hauptachse erstreckt und sich die Austrittskammer entlang einer zweiten Hauptachse erstreckt, und eine im Bereich der Eintrittsöffnung vorsehbare Lichtquelle Licht durch die Eintrittskammer, die Zwischenkammer, die Austrittskammer und die Austrittsöffnung auf ein auszuleuchtendes Objekt senden kann, dadurch gekennzeichnet dass kein Lichtstrahl entlang einer Geraden von einem Punkt der Eintrittsöffnung zu einem Punkt der Austrittsöffnung gelangen kann und dass jeweils mindestens die Innenfläche der Eintrittskammer, der Zwischenkammer und der Austrittskammer in jeweils mindestens einem ersten Bereich diffus reflektierend sind und einen Glanzgrad von 10% oder weniger aufweisen.

Zweckmäßig ist es, bei der Beleuchtungseinrichtung die Eintrittskammer und die Austrittskammer zueinander so anzuordnen, dass die erste Hauptachse und die zweite Hauptachse senkrecht zueinander verlaufen. Ebenfalls ist es zweckmäßig, die Kammern so zu dimensionieren, dass die erste Hauptachse die längste Hauptachse der Eintrittskammer ist und dass die zweite Hauptachse die längste Hauptachse der Austrittskammer ist. Zweckmäßig ist es, wenn die erste Hauptachse durch das Zentrum der Eintrittsöffnung verläuft und wenn die zweite Hauptachse durch das Zentrum der Austrittsöffnung verläuft.

Diese Anordnung der Kammern erlaubt eine kompakte Bauform. Dabei kann trotz insgesamt geringem Lichtausbreitungsweg zwischen Eintrittsöffnung und Austrittsöffnung ein sowohl intensitätsmäßiges als auch von der spektralen Verteilung her homogenes Licht erzeugt werden. Diese Bauform erlaubt es, ebenfalls ohne Schatter auszukommen. Die Innenflächen der Kammern können dabei im Wesentlichen glatt und kantenfrei gestaltet werden.

Vorteilhaft ist es, wenn eine flächige Lichtquelle verwendet wird. Eine solche flächige Lichtquelle sendet verteilt über eine bestimmte Fläche Licht aus. Beispielsweise können verteilt über die Fläche LEDs angeordnet sein. Die Fläche wird dabei nicht vollständig von LEDs ausgefüllt, über diese Fläche hinweg sind aber LEDs oder andere Strahler verteilt. Diese Fläche sollte relativ groß im Verhältnis zur Fläche der Eintrittsöffnung sein. Beispielsweise ist es zweckmäßig, wenn diese Fläche mindestens 50% der Fläche der Eintrittsöffnung in Anspruch nimmt, zweckmäßig kann auch ein Wert von 70% oder 90% sein.

Die Eintrittskammer wird vorzugsweise so gestaltet, dass sie rohrförmig die erste Hauptachse umschließt und dementsprechend senkrecht zur ersten Hauptachse eine Vielzahl von Querschnitten aufweist. Bei einer günstigen geometrischen Gestaltung der Eintrittskammer ist dabei die jeweils längste Ausdehnung eines Querschnittes kürzer als die erste Hauptachse. In entsprechender Weise kann die Austrittskammer rohrförmig die zweite Hauptachse umschließen. Auch die Austrittskammer kann senkrecht zur zweiten Hauptachse eine Vielzahl von Querschnitten aufweisen. Dabei ist es wiederum vorteilhaft, wenn die längste Ausdehnung eines Querschnittes jeweils kürzer als die zweite Hauptachse ist. Eine einfache und zweckmäßige Bauform sowohl für die Eintrittskammer als auch für die Austrittskammer ergibt sich, wenn alle Querschnitte die gleiche Form haben. Nützlich ist dabei eine rechteckige, quadratische oder kreisförmige Querschnittsform. Eine elliptische Form kann ebenfalls genutzt werden. In bevorzugten Ausführungsformen sind die Eintrittskammer und die Austrittskammer dementsprechend zylinder- oder quaderförmig. Eine quaderförmige Eintritts- oder Austrittskammer ist leicht von einer nicht-quaderförmigen Zwischenkammer abgrenzbar. Die Abgrenzung zwischen Eintrittskammer und Zwischenkammer und zwischen Austrittskammer und Zwischenkammer kann alternativ in der Regel auch dadurch erfolgen, dass die erste Hauptachse Symmetrieachse der Eintrittskammer ist, nicht aber die Zwischenkammer und die zweite Hauptachse Symmetrieachse der Austrittskammer nicht aber der Zwischenkammer ist. Bei einer Homogenisierungseinrichtung ohne solche Symmetrieachsen können Abschnitte gleichen Volumens jeweils als Eintritts-, Zwischen- bzw. Austrittskammer angesehen werden.

Günstig ist es, wenn die Innenfläche(n) der Eintrittskammer, der Zwischenkammer und/oder der Austrittskammer vollständig diffus reflektierend sind. Dies kann insbesondere auch durch das Vorsehen einer Beschichtung erreicht werden, welche dann die reflektierende Fläche bildet. Zweckmäßige Materialien für eine solche Beschichtung sind Bariumsulfat, Titandioxid oder Polytetrafluorethylen.

Zweckmäßig für die Wahl der Lichtquelle ist es, eine Vielzahl von LED-Lampen vorzusehen. Dabei sind zwischen 10 und 200 Lampen in der Regel angemessen, häufig zwischen 50 und 100 Lampen. Diese Lampen können in einer Ebene angeordnet werden. Dazu können sie beispielsweise auf einer Platte montiert werden. Die jeweils strahlenden Teile der LED-Lampen können dabei über die Platte hinausragen. Ein auch spektral besonders homogenes Licht lässt sich dadurch erzeugen, dass bei der Lichtquelle eine Vielzahl von Strahlern, beispielsweise 5, 10, 20 oder mehr jeweils verschiedener Frequenz zu Gruppen zusammengeschaltet werden. Die Homogenisierungseinrichtung erlaubt mit Lichtquellen, welche weniger als 30 solcher Gruppen ausweisen, ein auch spektral sehr homogenes Licht zu erzeugen.

Weitere Merkmale, aber auch Vorteile der Erfindung ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten. Die Abbildungen sind teilweise leicht vereinfacht und schematisch.
- Fig. 1: ist eine perspektivische Darstellung einer erfindungsgemäßen Homogenisierungseinrichtung.
- Fig. 2: ist ein schematisches Schnittbild durch eine maßlich ähnliche erfindungsgemäße Homogenisierungseinrichtung.
- Fig. 3: zeigt in perspektivischer Aufsicht eine Lichtquelle, welche zweckmäßigerweise im Rahmen der vorliegenden Erfindung eingesetzt werden kann.
- Fig. 4: ist eine schematische Darstellung eines Messaufbaus zur Bestimmung einer geeigneten Innenfläche für die Homogenisierungseinrichtung.

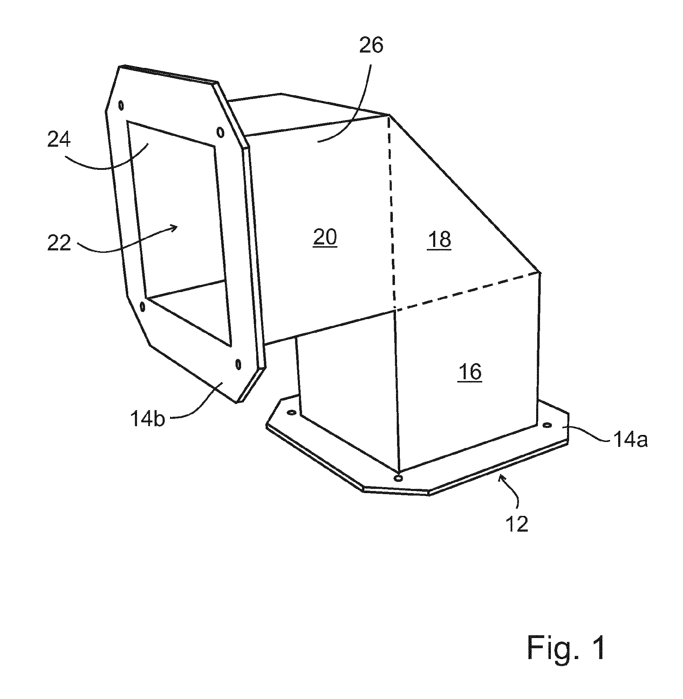

Fig. 1 zeigt in einer perspektivischen Ansicht von der Seite eine zeichnerische Darstellung einer erfindungsgemäßen Homogenisierungseinrichtung 10. Diese weist eine Eintrittsöffnung 12 auf. Die Eintrittsöffnung 12 selbst ist von einem Flansch 14a umgeben. Hinter der Eintrittsöffnung liegt die Eintrittskammer 16. Diese geht in eine Zwischenkammer 18 über. Hinter der Zwischenkammer 18 liegt die Austrittskammer 20. Die Austrittskammer 20 endet mit der Austrittsöffnung 22, welche ebenfalls durch einen Flansch 14b umgeben ist. Im Bereich der Austrittsöffnung 22 erkennt man die Innenfläche 24 der Austrittskammer 20. Ferner weist die Austrittskammer 20 eine Außenfläche 26 auf. Die Innenfläche 24 und die Außenfläche 26 der Austrittskammer 20 gehen in entsprechende Innen- und Außenflächen der Zwischenkammer 18 und der Eintrittskammer 16 über.

Die Eintrittskammer ist quaderförmig. Sie umschließt eine erste Hauptachse, die vom Zentrum der Eintrittsöffnung 12 nach oben ragt. Die Zwischenkammer 18 verbindet die Eintrittskammer 16 mit der Austrittskammer 20. Sie weist rechteckige Querschnitte auf. In der seitlichen Aufsicht hat sie jedoch eine Dreiecksform. Die Austrittskammer ist ebenfalls quaderförmig. Sie verläuft entlang einer zweiten Hauptachse, welche durch das Zentrum der Austrittsöffnung 22 verläuft.

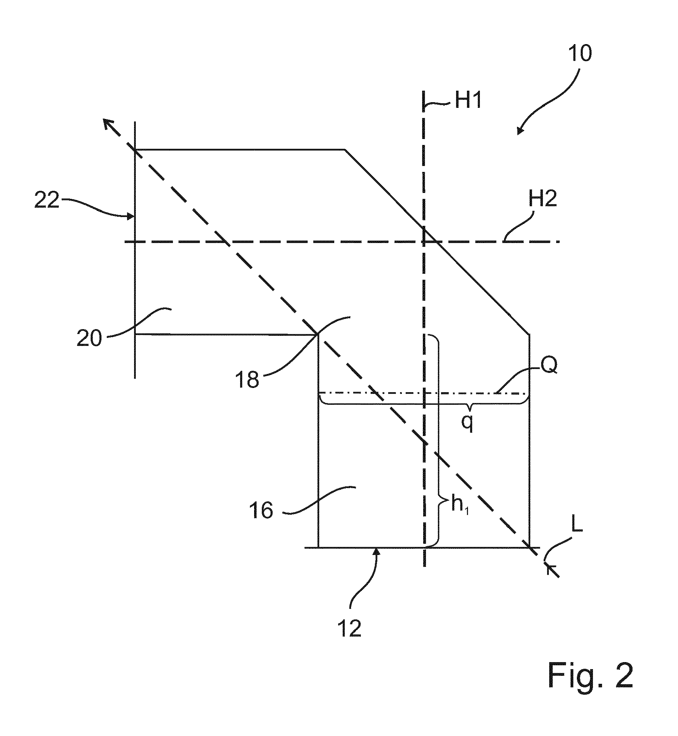

Fig. 2 zeigt eine schematische seitliche Schnittansicht einer erfindungsgemäßen Homogenisierungseinrichtung. Von der in dieser Zeichnung unten angeordneten Eintrittskammer 16 kann Licht über die Zwischenkammer 18 in die Austrittskammer 20 gelangen. Man erkennt, dass die erste Hauptachse H1 durch das Zentrum der Eintrittsöffnung 12 verläuft. Entsprechend verläuft die zweite Hauptachse H2 durch das Zentrum der Austrittsöffnung 22. Die beiden Hauptachsen stehen senkrecht zueinander. Ferner ist eine Referenzlinie L eingezeichnet, welche von einem am Rande der Eintrittsöffnung befindlichen Punkt zu einem am Rande der Austrittsöffnung befindlichen Punkt führt. Diese Linie verbindet zwei Punkte, welche gerade eben noch zur Eintrittsöffnung beziehungsweise zur Austrittsöffnung gehören. Entlang dieser Linie könnte jedoch kein Licht von der Eintrittsöffnung 12 zur Austrittsöffnung 22 gelangen, da die Kante der Zwischenkammer 18 der Lichtausbreitung im Wege ist.

Diese geometrische Ansicht erklärt also, dass die vorliegende geometrische Konstruktion der Homogenisierungseinrichtung 10 ohne die bei einer Ulbrichtkugel üblichen Schatter auskommt. Die Innenflächen der Kammern können vielmehr komplett glatt und kantenfrei gestaltet werden. Man erkennt, dass es hierfür wichtig ist, dass die Ausdehnung der Kammern, insbesondere der Eintrittskammer 16 und der Austrittskammer 20 senkrecht zu ihrer ersten Hauptachse H1 beziehungsweise zweiten Hauptachse H2 nicht zu groß sein kann. Daher wurde es im Rahmen dieser Erfindung als vorteilhaft erkannt, wenn die längste Ausdehnung eines Querschnittes Q kleiner ist als die Länge der Hauptachse, beispielsweise die relevante Länge der ersten Hauptachse H1 ist.

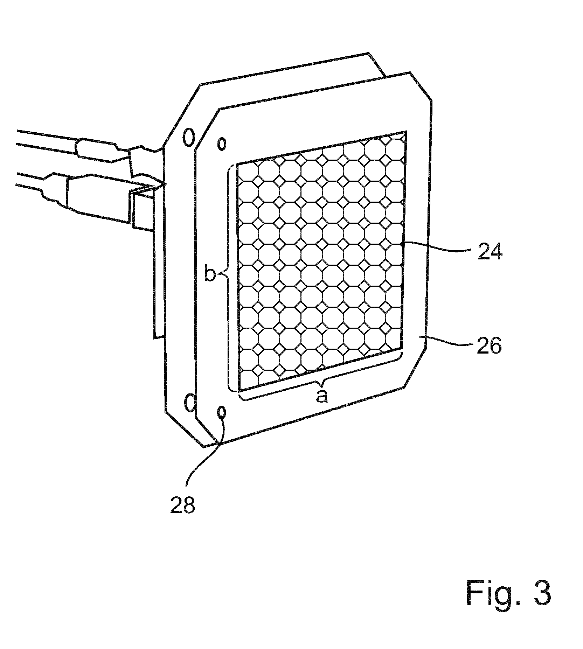

Fig. 3 zeigt eine zweckmäßige Lichtquelle zur Verwendung mit der vorliegenden Erfindung. Bei dieser Lichtquelle ist eine Vielzahl von LEDs 24 auf einer Trägerplatte 26 angeordnet. Dies ergibt eine flächige Lichtquelle. Die LEDs nehmen eine Fläche ein, welche durch das Produkt der Strecken a und b gegeben ist. Die Lichtquelle weist zweckmäßigerweise ca. 80 LEDs auf, die 22 verschiedene Frequenzen ausstahlen. (Die Wiedergabe der LED-Anordnung in Fig. 3 ist leicht vereinfacht.) Die Trägerplatte kann zweckmäßigerweise Verbindungsvorrichtungen aufweisen, beispielsweise mindestens ein Loch 28, welches zur Verschraubung der Trägerplatte 26 mit der gezeigten Flansch 14a dienen kann.

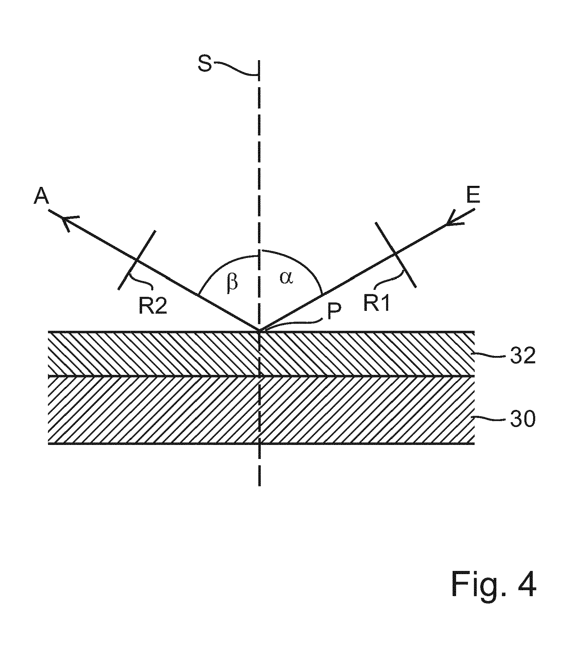

Fig. 4 zeigt in schematischer Ansicht einen Aufbau, mit welchem die Eignung einer Fläche zur Verwendung als diffus reflektierende Innenfläche im Rahmen der vorliegenden Erfindung überprüft werden kann. Gezeigt wird ein einfallender Lichtstrahl E, der am Punkt P auf eine Innenfläche tritt. Diese Innenfläche ist hier dargestellt als bestehend aus einem Trägermaterial 30 und einer aufgebrachten Beschichtung 32. Bei ideal spiegelnder (aber tatsächlich im Rahmen der Erfindung nicht vorzusehender) Reflexion würde der einfallende Lichtstrahl E in Richtung des ausfallenden Lichtstrahls A reflektiert. Dabei gilt der Einfallswinkel α (alpha) gleich Ausfallswinkel β (beta) ist, jeweils gemessen zur Senkrechten S auf der reflektierenden Fläche (hier der Beschichtung 32) am Reflexionspunkt P. In einem zweckmäßigen Abstand von Punkt P kann senkrecht zur Richtung des einfallenden Lichtes eine Referenzfläche R1 vorgesehen werden. In gleichem Abstand von P wird in Richtung des ausfallenden Strahls A eine zweite Referenzfläche R2 vorgesehen.
An beiden Referenzflächen kann die Bestrahlungsstärke gemessen werden. Diese wird zweckmäßigerweise in Watt pro Quadratmeter gemessen. Im Bereich sichtbaren Lichtes könnte alternativ auch die Beleuchtungsstärke in Candela pro Quadratmeter gemessen werden. (Die Homogenisierungseinrichtung kann aber auch mit Infrarotlicht genutzt werden.) Die Referenzflächen sollen für die Messung 5 Millimeter mal 5 Millimeter groß sein und in 10 mm Abstand vom Reflektionspunkt positioniert sein. Ein Material ist dann geeignet im Zusammenhang mit der Geometrie der Homogenisierungseinrichtung nach der vorliegenden Erfindung verwendet zu werden, wenn die Bestrahlungsstärke der zweiten Referenzfläche um einen Faktor 3 geringer ist als die Bestrahlungsstärke der ersten Referenzfläche. Der Faktor kann für besonders geeignete Materialien durchaus wesentlich größer sein, beispielsweise auch größer als 5 oder 10 oder 20. Die Reflexion der Flächen weicht also deutlich von einer Spiegelreflexion ab.

Messserien haben bestätigt, dass sowohl in Bezug auf die Helligkeitsverteilung als auch in Bezug auf die spektrale Verteilung die erfindungsgemäße Homogenisierungseinrichtung hervorragende Ergebnisse liefert. Eine Ulbrichtkugel liefert keine für die praktische Anwendung besseren Ergebnisse. Testweise wurde eine 3x3 cm große Platte ausgeleuchtet, auf der neun Messfelder von jeweils 1 x1 cm Größe angeordnet waren.

Diese Testfläche wurde einmal mit Hilfe der erfindungsgemäßen Homogenisierungseinrichtung aus Fig. 1 und einmal mit einer Einrichtung mit einer Ulbrichtkugel ausgeleuchtet. Die Lichtquelle war jeweils gleich, es wurde eine flächige LED-Lichtquelle verwendet, so wie in Fig. 3 dargestellt, nämlich eine mit 80 LEDs, die 22 verschiedene Frequenzen ausstahlen. Für beide Homogenisierungseinrichtungen wurden drei Werte gemessen. Zum einen die Beleuchtungsstärke, zum anderen der Farbwiedergabeindex und zum Dritten die Farbtemperatur. Die jeweiligen Werte sind unten wiedergegeben, wobei CCT für die Messung der Lichtfarbe steht (in Anlehnung an den englischen Fachbegriff *Correlated Color Temperaturen),* CRI für die Messung des Farbwiedergabeindexes (in Anlehnung an den englischen Fachbegriff *Color Rendering Index)* und LUX für die Beleuchtungsstärke insgesamt.

Sowohl in Tabelle 2 sowie auch in Tabelle 3 wurde in jeder Spalte die Differenz zwischen dem maximalen und dem minimalen Wert ermittelt. Für jede Spalte wurde der Quotient aus dem Minimum und dem Maximum ermittelt und zur einfacheren Darstellung mit 100 multipliziert. Die entsprechenden Werte erscheinen in der Zeile "Uniformity".

**Tabelle 1 - Anordnung der Messpunkte**

| | | |
|---|---|---|
| P1 | P2 | P3 |
| P4 | P5 | P6 |
| P7 | P8 | P9 |

**Tabelle 2 - Messung mit einer Ulbrichtkugel**

| | CCT | CRI | LUX |
|---|---|---|---|
| P1 | 6577 | 98,7 | 1397 |
| P2 | 6581 | 98,6 | 1406 |
| P3 | 6582 | 98,6 | 1408 |
| P4 | 6589 | 98,6 | 1402 |
| P5 | 6609 | 98,6 | 1409 |
| P6 | 6620 | 98,6 | 1408 |
| P7 | 6606 | 98,6 | 1400 |
| P8 | 6619 | 98,6 | 1409 |
| P9 | 6620 | 98,6 | 1403 |
| Uniformity: | 99,35 | 99,90 | 99,15 |

**Tabelle 3 - Messung mit einer erfindungsgemäßen Homogenisierungseinrichtung**

| | CCT | CRI | LUX |
|---|---|---|---|
| P1 | 6585 | 98,9 | 2418 |
| P2 | 6609 | 98,9 | 2419 |
| P3 | 6658 | 99 | 2425 |
| P4 | 6617 | 98,9 | 2410 |
| P5 | 6653 | 99 | 2448 |
| P6 | 6683 | 99 | 2431 |
| P7 | 6674 | 99 | 2401 |
| P8 | 6647 | 99 | 2429 |
| P9 | 6693 | 99 | 2413 |
| Uniformity: | 98,39 | 99,90 | 98,08 |

Für alle praktischen und auch wissenschaftlichen Anmeldungen gelten Werte von mehr als 96 als sehr gut und ein Wert von mehr als 98 als hervorragend. Werte von über 98 werden von der kompakten, erfindungsgemäßen Homogenisierungseinrichtung im Hinblick auf alle drei gemessenen Parameter erreicht. Der für viele Anwendungen sehr wichtige Farbwiedergabeindex ist ebenso gut wie bei der baulich deutlich größeren Ulbrichtkugel mit einem Durchmesser von 30 cm.

Aus diesen Abbildungen und der vorangegangenen Beschreibung insgesamt wurde deutlich, wie sich eine zweckmäßige Homogenisierungseinrichtung herstellen lässt. Da die Einrichtung mehrere glatte Flächen aufweist, ist sie wesentlich kompakter als eine Kugel und kann gut mit anderen Aufbauten kombiniert werden.

### Bezugszeichenliste

- 10: Homogenisierungseinrichtung
- 12: Eintrittsöffnung
- 14: Flansch
- 16: Eintrittskammer
- 18: Zwischenkammer
- 20: Austrittskammer
- 22: Austrittsöffnung
- 24: Innenfläche
- 26: Außenfläche
- 24: LEDs
- 26: Trägerplatte
- 28: Loch
- 30: Trägermaterial
- 32: Beschichtung

- H1: erste Hauptachse
- H2: zweite Hauptachse
- h 1: Erstreckung der Eintrittskammer entlang H1
- h2: Erstreckung der Austrittskammer entlang H2
- a: Erstreckung der flächigen Lichtquelle in erster Richtung
- b: Erstreckung der flächigen Lichtquelle in zweiter Richtung
- L: Referenzlinie
- S: Senkrechte
- E: einfallender Strahl
- A: ausfallender Referenzstrahl
- P: Reflexionspunkt
- R1: erste Referenzfläche
- R2: zweite Referenzfläche

## Patentansprüche

1. Beleuchtungseinrichtung zur homogenen Ausleuchtung eines Objekts, welche eine Homogenisierungseinrichtung (10) umfasst und zur Verbindung mit einer Lichtquelle geeignet ist, wobei die Homogenisierungsvorrichtung (10) eine Eintrittsöffnung (12), eine hinter der Eintrittsöffnung (12) angeordnete Eintrittskammer (16), eine Zwischenkammer (18), eine Austrittskammer (20) und eine hinter der Austrittskammer (20) angeordnete Austrittsöffnung (22) aufweist und die Eintrittskammer (16), die Zwischenkammer (18) und die Austrittskammer (20) jeweils eine Außenfläche (26) und eine Innenfläche (24) aufweisen und sich die Eintrittskammer (16) entlang einer ersten Hauptachse (H1) erstreckt und sich die Austrittskammer (20) entlang einer zweiten Hauptachse (H2) erstreckt, und eine im Bereich der Eintrittsöffnung (12) vorsehbare Lichtquelle Licht durch die Eintrittskammer (16), die Zwischenkammer (18), die Austrittskammer (20) und die Austrittsöffnung (22) auf ein auszuleuchtendes Objekt senden kann, **dadurch gekennzeichnet dass** kein Lichtstrahl entlang einer Geraden von einem Punkt der Eintrittsöffnung (12) zu einem Punkt der Austrittsöffnung (22) gelangen kann und dass jeweils mindestens die Innenfläche (24) der Eintrittskammer (16), der Zwischenkammer (18) und der Austrittskammer (20) in jeweils mindestens einem ersten Bereich diffus reflektierend sind, so dass ein an einer dieser Innenflächen (24) reflektierter Lichtstrahl, welcher einfallend eine erste Referenzfläche (R1) mit einer ersten Bestrahlungsstärke ausleuchtet, ausfallend eine zweite Referenzfläche (R2) gleicher Größe mit einer zweiten Bestrahlungsstärke ausleuchtet, welche mindestens um einen Faktor 3 geringer ist als die erste Bestrahlungsstärke, wenn beide Referenzflächen (R1, R2) im Abstand von 10 Millimetern zum Reflexionspunkt (P) positioniert sind.

2. Beleuchtungseinrichtung nach Anspruch 1, wobei mindestens eine der Innenflächen (24) in dem ersten Bereich einen Glanzwert von 10 oder weniger aufweist.

3. Beleuchtungseinrichtung nach einem der vorhergehenden Ansprüche, wobei ein an einer dieser Innenflächen (24) reflektierter Lichtstrahl, welcher einfallend einen ersten Raumwinkel beleuchtet, ausfallend einen mindestens zehnmal größeren Raumwinkel beleuchtet.

4. Beleuchtungseinrichtung nach einem der vorhergehenden Ansprüche, wobei die erste Hauptachse (H1) und die zweite Hauptachse (H2) senkrecht zueinander verlaufen.

5. Beleuchtungseinrichtung nach einem der vorhergehenden Ansprüche, wobei die Eintrittsöffnung (12) eine erste Fläche (R1) umfasst und die Lichtquelle eine flächige Lichtquelle ist, welche über eine zweite Fläche (R2) Licht sendet, wobei die Größe der zweiten Fläche (R2) mindestens 50% der Größe der ersten Fläche (R1) beträgt.

6. Beleuchtungseinrichtung nach einem der vorhergehenden Ansprüche, wobei die Eintrittskammer (16) rohrförmig die erste Hauptachse (H1) umschließt und senkrecht zur ersten Hauptachse (H1) eine Vielzahl von Querschnitten aufweist, wobei die längste Ausdehnung eines Querschnitts jeweils kürzer als die erste Hauptachse (H1) ist.

7. Beleuchtungseinrichtung nach einem der vorhergehenden Ansprüche, wobei die Austrittskammer (20) rohrförmig die zweite Hauptachse (H2) umschließt und senkrecht zur zweiten Hauptachse (H2) eine Vielzahl von Querschnitten aufweist, wobei die längste Ausdehnung eines Querschnitts jeweils kürzer als die zweite Hauptachse (H2) ist.

8. Beleuchtungseinrichtung nach Anspruch 6 oder 7, wobei alle Querschnitte gleiche Form haben.

9. Beleuchtungseinrichtung nach Anspruch 8, wobei die Querschnitte die Form eines Kreises oder eines Quadrats haben.

10. Beleuchtungseinrichtung nach einem der vorhergehenden Ansprüche, wobei an den Innenflächen (24) der Eintrittskammer (16), der Zwischenkammer (18) und/oder der Austrittskammer (20) keine Schatter vorgesehen sind.

11. Beleuchtungseinrichtung nach einem der vorhergehenden Ansprüche, wobei die Innenfläche(n) (24) der Eintrittskammer (16), der Zwischenkammer (18) und/oder der Austrittskammer (20) vollständig diffus reflektierend sind.

12. Beleuchtungseinrichtung nach einem der vorhergehenden Ansprüche, wobei die Innenfläche(n) (24) der Eintrittskammer (16), der Zwischenkammer (18) und/oder der Austrittskammer (20) eine Beschichtung aus Bariumsulfat oder Titandioxid oder Polytetrafluorethylen umfassen.

13. Beleuchtungseinrichtung nach einem der vorhergehenden Ansprüche, wobei als Lichtquelle eine Vielzahl von LED-Lampen (24) vorgesehen ist.

14. Beleuchtungseinrichtung nach Anspruch 13, wobei die LED-Lampen (24) in einer Ebene angeordnet sind.

15. Beleuchtungseinrichtung nach einem der vorhergehenden Ansprüche, wobei die Lichtquelle eine Vielzahl von Strahlern verschiedener Frequenz umfasst.
